# EUROPÄISCHE PATENTSCHRIFT

(11) **EP 0 924 401 B1**
(45) Veröffentlichungstag und Bekanntmachung des Hinweises auf die Patenterteilung: **28.01.2004**
(21) Anmeldenummer: 98122305.0
(22) Anmeldetag: 24.11.1998
(51) Int. Cl.: F01N 7/00, F01N 7/18, B60K 13/04

(54) **Nachschalldämpfer einer Kraftfahrzeug-Abgasanlage**
End silencer of a motor vehicle exhaust system
Silencieux pour un dispositif d'échappement d'un véhicule automobile

(30) Priorität: 19.12.1997 DE 19756732
(43) Veröffentlichungstag der Anmeldung: 23.06.1999
(73) Patentinhaber: Bayerische Motoren Werke Aktiengesellschaft, 80788 München (DE)
(72) Erfinder: Brich, Jürgen, 86169 Augsburg (DE); Lischo, Bernd, 84405 Dorfen (DE)

(56) Entgegenhaltungen:
- EP-A- 0 252 373
- EP-A- 0 352 838
- PATENT ABSTRACTS OF JAPAN vol. 016, no. 191 (M-1245), 8. Mai 1992 (1992-05-08) & JP 04 027708 A (MAZDA MOTOR CORP), 30. Januar 1992 (1992-01-30)

## Beschreibung

Die Erfindung betrifft einen Schalldämpfer, insbesondere einen Nachschalldämpfer einer Kraftfahrzeug-Abgasanlage, mit einem im wesentlichen senkrecht zur Fahrzeug-Längsachse angeordneten Bodenteil, das mit dem Mantelrohr oder einem Mantelrohr-Segment des Schalldämpfers über eine Bördelnaht verbunden ist und zumindest ein Endrohr aufweist. Zum technischen Umfeld wird beispielshalber auf die EP 0 252 373 A2 verwiesen.

Üblicherweise sind Schalldämpfer von Kraftfahrzeug-Abgasanlagen so aufgebaut wie in der soeben genannten Schrift gezeigt, d.h. sie bestehen aus einem sog. Mantelrohr, dessen Längsachse meist (zumindest im wesentlichen) parallel zur Fahrzeug-Längsachse ist, sowie aus stimseitigen und somit zur Fahrzeug-Längsachse im wesentlichen senkrechten sog. Bodenteilen, die den Innenraum des Mantelrohres bezüglich des Kraftfahrzeuges nach vorne sowie nach hinten begrenzen. Im hinteren Bodenteil ist dabei üblicherweise ein sog. Endrohr vorgesehen, über welches die in der Abgasanlage geführten Abgase der das Kraftfahrzeug antreibenden Brennkraftmaschine in die Umgebung abgeführt werden.

Eine andere bekannte Bauart von Schalldämpfern für Kraftfahrzeug-Abgasanlagen ist die sog. Schalenbauweise, nach welcher bevorzugt zwei Halbschalen zum Mantelrohr zusammengesetzt werden, so daß diese Halbschalen auch als Mantelrohrsegmente bezeichnet werden können, wobei sich der Begriff "Segment" auf den zumeist elliptischen Querschnitt dieser Schalldämpfer bezieht. Das Bodenteil kann dabei an eines der bevorzugt beiden Mantelrohrsegmente angeformt oder angeschweißt sein und mit dem anderen Mantelrohrsegment wiederrum über eine Bördelnaht verbunden sein.

Im Innenraum dieser Schalldämpfer können im übrigen unterschiedliche Maßnahmen zur Schalldämpfung vorgesehen sein, d.h. der Schalldämpfer kann beispielsweise als Reflexions- oder auch als Absorptions-Schalldämpfer oder auch als Kombination hiervon ausgebildet sein, jedoch ist dieser Innenaufbau des Schalldämpfers für das Wesen der vorliegenden Erfindung unerheblich.

Zur Erfüllung zunehmend strengerer gesetzlicher Anforderungen müssen die Schalldämpfer zunehmend größer bzw. voluminöser ausgelegt werden, um die heutzutage bereits relativ niedrigen Geräuschgrenzwerte überhaupt noch erfüllen zu können. Auch die steigenden Anforderungen bezüglich Dichtheit und Emissionen führen dazu, daß die Schalldämpfer bzw. die Schalldämpfer-Gehäuse heutzutage wesentlich stabiler und starrer ausgebildet werden als zu früheren Zeiten.

Ein weiteres Kriterium, welches bei der Entwicklung eines Kraftfahrzeuges zu berücksichtigen ist, ist dessen Crash-Verhalten. Bei einem Aufprall des Fahrzeuges auf ein Hindernis oder bei einem Aufprall eines anderen Fahrzeuges auf das Heck des zu entwickelnden Fahrzeuges soll die Fahrgastzelle dem Fahrzeuginsassen eine möglichst große Sicherheit bieten. Dies macht es erforderlich, daß - im Hinblick auf einen Heckaufprall - im Heckbereich des Fahrzeuges geeignete Deformationszonen vorgesehen sind. Dabei sollen jedoch wesentliche bzw. kritische Bauteile in diesem Heckbereich durch die Deformationen bei einem Heckaufprall nicht beschädigt werden

Nun steht aber die oben beschriebene zunehmend großvolumigere und dabei starrere Ausbildung der Nachschalldämpfer diesen Anforderungen an eine gezielte Deformation entgegen. So kann beispielsweise bei einem Heckaufprall dieser Nachschalldämpfer als komplette quasi unverformte Einheit verschoben werden, insbesondere wenn dieser Nachschalldämpfer bezüglich der Fahrzeugkarosserie sehr weit hinten angeordnet ist bzw. wenn dessen Endrohr von hinten sichtbar und somit im Falle eines Heck-Crashes oder Heckaufpralles frei zugänglich ist.

Eine Abhilfemaßnahme für diese geschilderte Problematik aufzuzeigen, ist Aufgabe der vorliegenden Erfindung.
Die Lösung dieser Aufgabe ist dadurch gekennzeichnet, daß die Bördelnaht als Ausknüpf-Bördelnaht ausgebildet ist, welche bei einer über das Endrohr eingeleiteten Druckeinwirkung auf das Bodenteil eine Längsverschiebung desselben gegenüber dem Mantelrohr oder dem Mantelrohr-Segment ermöglicht. Bei einem Schalldämpfer mit einem geschlossenen Mantelrohr ist somit das Bodenteil unter Druckeinwirkung auf bzw. über das Endrohr quasi in das Mantelrohr hinein verschiebbar, während bei einem Schalldämpfer in Schalenbauweise mit dem besagten Mantelrohr-Segment diese Schalenbauweise durch die Druckeinwirkung quasi aufgetrennt werden kann.

Dabei kann ein sich im wesentlichen gegen Fahrtrichtung erstreckender Randsteg des Bodenteiles vom umgebördelten Endabschnitt des Mantelrohres oder des Mantelrohr-Segmentes umgriffen werden. Ferner kann zwischen dem Randsteg des Bodenteiles sowie dem Mantelrohr/Mantelrohr-Segment ein Dichtelement vorgesehen sein, wobei noch darauf hingewiesen sei, daß eine derartige sog. Ausknüpf-Bördelnaht selbstverständlich auch an Schalldämpfern vorgesehen werden kann, bei denen bislang das Bodenteil mit dem Mantelrohr oder mit einem Mantelrohr-Segment verschweißt war.

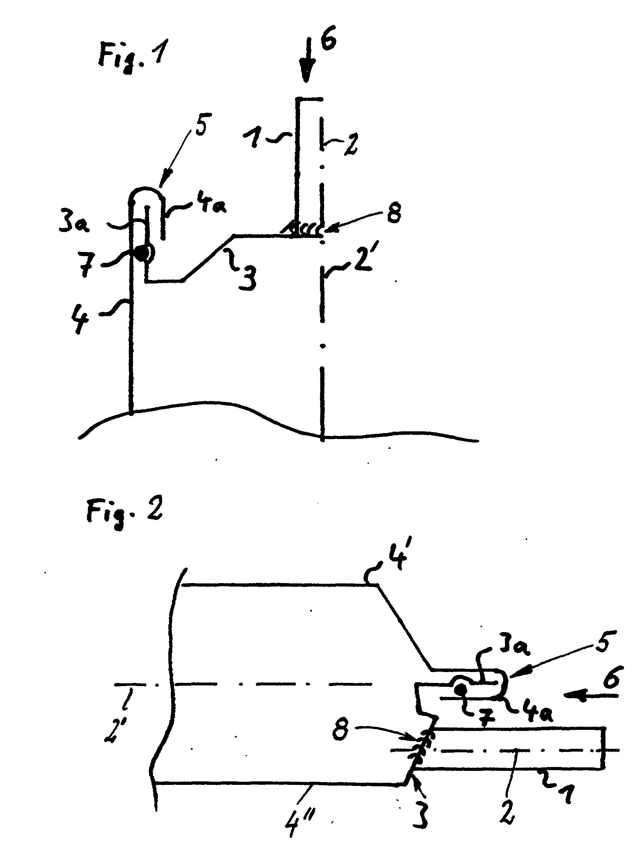

Näher erläutert wird die Erfindung anhand zweier bevorzugter Ausführungsbeispiele, wobei die beigefügten Figuren jeweils einen Prinzip-Teilschnitt durch einen erfindungsgemäßen Nachschalldämpfer einer Kraftfahrzeug-Abgasanlage zeigen, und wobei in Fig. 1 ein solcher mit einem in sich geschlossenen Mantelrohr und in Fig. 2 ein solcher in Schalenbauweise mit zwei Mantelrohrsegmenten dargestellt ist. Dabei sind gleiche Bauelemente jeweils mit gleichen Bezugsziffern bezeichnet.

Die nur bruchstückhaft gezeigten Schalldämpfer fungieren als Nachschalldämpfer einer nicht näher dargestellten Kraftfahrzeug-Abgasanlage, was aus der Anordnung des mit der Bezugsziffer 1 bezeichneten Endrohres ersichtlich wird, über welches -die Abgase der das Kraftfahrzeug antreibenden Brennkraftmaschine in die Umgebung abgeführt werden. Beim Ausführungsbeispiel nach Fig. 1 fällt die Längsachse 2 des Endrohres 1 mit der Längsachse 2' des Schalldämpfers zusammen, beim Ausführungsbeispiel nach Fig. 2 sind die beiden Längsachsen 2, 2' zueinander parallel. Stets verläuft zumindest die Längsachse 2 des Endrohres 1 im wesentlichen parallel zur Längsachse des Fahrzeuges.

Das Endrohr 1 ist wie üblich in ein senkrecht zur Fahrzeug-Längsachse bzw. senkrecht zur Längsachse 2 angeordnetes Bodenteil 3 des Schalldämpfers eingesetzt bzw. über eine Schweißnaht 8 mit diesem verbunden. Bei Ausführungsbeispiel nach Fig. 1 ist das Bodenteil 3 wie üblich mit dem (in sich geschlossenen) Mantelrohr 4 des Schalldämpfers über eine Bördelnaht 5 verbunden, beim Ausführungsbeispiel nach Fig. 2 ist das Bodenteil 3 an ein sog. zweites Mantelrohr-Segment 4" angeformt, das zusammen mit einem sog. ersten Mantelrohr-Segment 4' das Mantelrohr 4 des Schalldämpfers bildet, wobei die beiden Mantelrohr-Segmente 4', 4" jeweils Halbschalen darstellen, so daß es sich beim Schalldämpfer nach Fig. 2 also um einen solchen in Schalenbauweise handelt. Dabei sind auch diese beiden Halbschalen bzw. Mantelrohr-Segmente 4', 4" über eine Bördelnaht 5 sozusagen indirekt miteinander verbunden, wobei diese Bördelnaht 5 zwischen dem freien Ende des Bodenteiles 3 sowie dem ersten Mantelrohr-Segment 4' vorgesehen ist.

Die Bördelnaht 5 ist hier jedoch anders ausgebildet als bisher an Schalldämpfern üblich. Sie ist nämlich als sog. Ausknüpf-Bördelnaht (ebenfalls Bezugsziffer 5) gestaltet, welche bei einer über das Endrohr 1 eingeleiteten Druckeinwirkung (Pfeil 6) auf das Bodenteil 3 eine Längsverschiebung desselben gegenüber dem Mantelrohr 4 (beim Ausführungsbeispiel nach Fig. 1) bzw. gegenüber dem Mantelrohr-Segment 4' (beim Ausführungsbeispiel nach Fig. 2) ermöglicht. Der Zweck dieser Ausbildung ist der folgende:

Die besagte durch den Pfeil 6 verdeutlichte Druckeinwirkung resultiere aus einem Heckaufprall, d.h. auf den Heckbereich des Kraftfahrzeuges, in welchem der erfindungsgemäße Nachschalldämpfer eingebaut ist, fährt beispielsweise ein anderes Fahrzeug auf und deformiert hierdurch das Kraftfahrzeug-Heck. Hierdurch wird auch das Endrohr 1 gemäß Pfeilrichtung 6 verschoben. Wäre nun der Schalldämpfer wie üblich aufgebaut (wobei bspw. - wie in der eingangs genannten EP 0 252 373 A2 gezeigt - das Bodenteil 3 auf dem Mantelrohr 4 aufliegt bzw. dieses randseitig umhüllt), so würde durch diese Druckeinwirkung 6 der gesamte Schalldämpfer gemäß Pfeilrichtung 6 verschoben werden und könnte hierdurch andere Bauteile des Kraftfahrzeuges beschädigen.

Ist nun aber der Schalldämpfer wie in Figur 1 gezeigt aufgebaut, d.h. ist das Bodenteil 3 über die besagte Ausknüpf-Bördelnaht 5 mit dem Mantelrohr 4 verbunden, so bewirkt die Druckeinwirkung 6, daß das Bodenteil 3 zunächst alleinig gemäß Pfeilrichtung 6 gegenüber dem Mantelrohr 4 in Richtung seiner Längsachse 2 verschoben wird. Hierdurch kann ein meßbarer Anteil der Aufprallkraft, d.h. der Druckeinwirkung 6 abgebaut werden. Gleiches gilt für das Ausführungsbeispiel nach Fig. 2, da hierbei durch die Druckeinwirkung 6 ebenfalls die Ausknüpf-Bördelnaht 5 gelöst wird, d.h. das Bodenteil 3 wird zusammen mit dem damit quasi untrennbar verbundenen (zweiten) Mantelrohr-Segment 4" gemäß Pfeilrichtung 6 in Richtung seiner Längsachse 2 gegenüber dem (ersten) Mantelrohrsegment 4' verschoben. Auch hierbei wird die Ausknüpf-Bördelnaht 5 aufgebrochen, wobei das (obere) Mantelrohr-Segment 4' im wesentlich seine Position beibehält und somit zumindest ein Teil der Druckeinwirkung gemäß Pfeil 6 in Verformungsarbeit am Schalldämpfer umgewandelt und somit abgebaut wird.

Zwar wird nach einer gewissen Verschiebestrecke des Bodenteiles 3 dann, wenn die Druckeinwirkung 6 weiter anhält, d.h. dann, wenn es sich um einen intensiven Heckaufprall handelt, der gesamte Schalldämpfer ebenfalls gemäß Pfeilrichtung 6 verschoben werden, jedoch werden die schädlichen Folgen durch die erfindungsgemäße Zuerst-Verschiebung des Bodenteiles 3 alleinig (nach Fig. 1 ) bzw. zusammen mit dem (unteren) Mantelrohr-Segment 4" (nach Fig. 2) zumindest abgemildert, wobei noch darauf hingewiesen sei, daß beim Ausführungsbeispiel nach Fig. 2 die Anordnung bevorzugt darart zu wählen ist, daß eine geringfügige Verschiebung des mit dem Bodenteil 3 verbundenen Mantelrohr-Segmentes 4" ohne schwerwiegende Konsequenzen möglich sein sollte.

Wie geschildert resultiert die Druckeinwirkung 6 aus einem Heckaufprall auf das nicht gezeigte Kraftfahrzeug. Die Pfeilrichtung 6 stellt somit ebenfalls die übliche Fahrtrichtung des Kraftfahrzeuges, in welchem ein erfindungsgemäßer Schalldämpfer eingebaut ist, dar. Nun ist wie ersichtlich die Bördelnaht 5 derart gestaltet, daß ein sich im wesentlichen gegen Fahrtrichtung 6 erstrekkender Randsteg 3a des Bodenteiles 3 vom umgebördelten Endabschnitt 4a des Mantelrohres 4 bzw. des Mantelrohr-Segmentes 4' umgriffen wird. Diese Bördelnaht 5 ist hierdurch ebenso stabil und dauerfest haltbar, wie die bisher bei Schalldämpfern üblichen Bördelnähte.

Zur Abdichtung des Schalldämpfers kann zwischen dem Randsteg 3a sowie dem Mantelrohr 4 bzw. dem Mantelrohr-Segment 4' im Bereich von dessen umgebördeltem Endabschnitt 4a ein Dichtelement 7, beispielsweise aus Glasfaser, vorgesehen sein, jedoch kann dies sowie eine Vielzahl weiterer Details insbesondere konstruktiver Art durchaus abweichend von den gezeigten Ausführungsbeispielen gestaltet sein, ohne den Inhalt der Patentansprüche zu verlassen.

### Bezugszeichenliste:

- 1: Endrohr
- 2: Längsachse von 1
- 2': Längsachse des Schalldämpfers
- 3: Bodenteil
- 3a: Randsteg von 3
- 4: Mantelrohr
- 4': erstes Mantelrohr-Segment
- 4": zweites Mantelrohr-Segment
- 4a: umgebördelter Endabschnitt von 4 bzw. von 4'
- 5: Bördelnaht
- 6: Pfeil: Druckeinwirkung und übliche Fahrtrichtung
- 7: Dichtelement
- 8: Schweißnaht (zwischen 1 und 3)

## Patentansprüche

1. Schalldämpfer, insbesondere Nachschalldämpfer einer Kraftfahrzeug-Abgasanlage, mit einem im wesentlichen senkrecht zur Fahrzeug-Längsachse angeordneten Bodenteil (3), das mit dem Mantelrohr (4) oder einem Mantelrohr-Segment (4') des Schalldämpfers über eine Bördelnaht (5) verbunden ist und zumindest ein Endrohr (1) aufweist,
**dadurch gekennzeichnet, daß** die Bördelnaht (5) als Ausknüpf-Bördelnaht (5) ausgebildet ist, welche bei einer über das Endrohr (1) eingeleiteten Druckeinwirkung (6) auf das Bodenteil (3) eine Längsverschiebung desselben gegenüber dem Mantelrohr (4) oder dem Mantelrohr-Segment (4') ermöglicht.

2. Schalldämpfer nach Anspruch 1,
**dadurch gekennzeichnet, daß** ein sich im wesentlichen gegen Fahrtrichtung (6) erstreckender Randsteg (3a) des Bodenteiles (3) vom umgebördelten Endabschnitt (4a, 4a') des Mantelrohres (4) oder des Mantelrohr-Segmentes (4') umgriffen wird.

3. Schalldämpfer nach Anspruch 1 oder 2,
**dadurch gekennzeichnet, daß** in der Ausknüpf-Bördelnaht (5) zwischen dem Randsteg (3a) des Bodenteiles (3) sowie dem Mantelrohr (4) oder dem Mantelrohr-Segment (4') ein Dichtelement (7) vorgesehen ist.

## Claims

1. A silencer, especially a rear silencer on a vehicle exhaust system, comprising an end part (3) disposed substantially at right angles to the vehicle longitudinal axis and connected to the tubular jacket (4) or to a segment (4') of the tubular jacket of the silencer via a double-flanged seam (5) and comprising at least an end pipe (1), **characterised in that** the seam (5) is an untying seam (5) which, in the event of pressure (6) exerted on the end part (3) via the end pipe (1), enables the end part to move longitudinally relative to the jacket (4) or jacket segment (4').

2. A silencer according to claim 1, **characterised in that** an edge web (3a) of the end part (3), extending substantially against the direction of travel (6), is surrounded by the flanged end portion (4a, 4a') of the jacket (4) or of the segments (4').

3. A silencer according to claim 1 or 2, **characterised in that** the sealing element (7) is provided in the untying double-flanged seam (5) between the end web (3a) of the end part (3) and the jacket (4) or jacket segment (4').

## Revendications

1. Silencieux, notamment silencieux arrière pour un dispositif d'échappement d'un véhicule automobile comportant une partie inférieure (3) disposée de manière essentiellement perpendiculaire à l'axe longitudinal du véhicule, laquelle partie inférieure (3) est raccordée au tube d'enveloppe (4) ou à un segment (4') du tube d'enveloppe du silencieux au moyen d'une bordure sertie (5) et présentant au moins un embout d'échappement (1),
**caractérisé en ce que**
la bordure sertie (5) est en forme d'agrafage détachable, laquelle permet, lors d'un effet de compression (6) transmis par l'embout d'échappement (1) sur la partie inférieure (3), d'obtenir un déplacement longitudinal de cette dernière par rapport au tube d'enveloppe (4) ou du segment (4') du tube d'enveloppe.

2. Silencieux suivant la revendication 1,
**caractérisé en ce qu'**
une barrette (3a) de la partie inférieure (3), se prolongeant essentiellement contre le sens de circulation (6), est renfermée dans la section terminale (4a, 4a') à bords rabattus du tube d'enveloppe (4) ou du segment (4') du tube d'enveloppe.

3. Silencieux suivant la revendication 1 ou 2,
**caractérisé en ce qu'**
un élément d'étanchéification (7) est prévu dans la bordure détachable (5) entre la barrette (3a) de la partie inférieure (3) et le tube d'enveloppe (4) ou le segment (4') du tube d'enveloppe.
